# FASCICULE DE BREVET EUROPEEN

(11) **EP 3 548 309 B1**
(45) Date de publication et mention de la délivrance du brevet: **29.07.2020**
(21) Numéro de dépôt: 17812027.5
(22) Date de dépôt: 27.11.2017
(51) Int. Cl.: B60C 11/00, B60C 11/18

(54) **PNEUMATIQUE AVEC UNE BANDE DE ROULEMENT COMPORTANT DES ÉLÉMENTS DE RENFORCEMENT CIRCONFÉRENTIELS DANS LA SOUS-COUCHE**
REIFEN MIT EINER LAUFFLÄCHE MIT UMLAUFENDEN VERSTÄRKUNGSELEMENTEN IN DER UNTERSCHICHT
TYRE COMPRISING A TREAD CONTAINING CIRCUMFERENTIAL REINFORCING ELEMENTS IN THE SUBLAYER

(30) Priorité: 02.12.2016 FR 1661861
(43) Date de publication de la demande: 09.10.2019
(73) Titulaire: Compagnie Générale des Etablissements Michelin, 63000 Clermont-Ferrand (FR)
(72) Inventeur: PERRIN, Frédéric, 63040 Clermont-Ferrand cedex 9 (FR)
(74) Mandataire: Bauvir, Jacques
(86) Numéro de dépôt international: PCT/FR2017/053257
(87) Numéro de publication internationale: WO 2018/100275

(56) Documents cités:
- EP-A1- 2 708 382
- EP-A1- 3 031 627
- WO-A1-2005/063509
- WO-A1-2016/174100

## Description

### Domaine de l'invention

La présente invention est relative aux pneumatiques, et plus particulièrement à un pneumatique dont les performances d'adhérence sont améliorées.

De façon générale, un pneumatique est un objet ayant une géométrie de révolution par rapport à un axe de rotation. Un pneumatique comprend deux bourrelets destinés à être montés sur une jante ; il comprend également deux flancs reliés aux bourrelets, un sommet comportant une bande de roulement destinée à entrer en contact avec le sol, le sommet ayant un premier côté relié à l'extrémité radialement extérieure de l'un des deux flancs et ayant un deuxième côté relié à l'extrémité radialement extérieure de l'autre des deux flancs.

La constitution du pneumatique est usuellement décrite par une représentation de ses constituants dans un plan méridien, c'est-à-dire un plan contenant l'axe de rotation du pneumatique. Les directions radiale, axiale et circonférentielle désignent respectivement les directions perpendiculaire à l'axe de rotation du pneumatique, parallèle à l'axe de rotation du pneumatique et perpendiculaire à tout plan méridien. Dans ce qui suit, les expressions « radialement », « axialement » et « circonférentiellement » signifient respectivement « selon une direction radiale », « selon la direction axiale » et « selon une direction circonférentielle » du pneumatique. Les expressions « radialement intérieur, respectivement radialement extérieur » signifient « plus proche, respectivement plus éloigné, de l'axe de rotation du pneumatique, selon une direction radiale ». Le plan équatorial est un plan perpendiculaire à l'axe de révolution du pneumatique, positionné axialement de façon à couper la surface de la bande de roulement sensiblement à mi-distance des bourrelets. Les expressions « axialement intérieur, respectivement axialement extérieur » signifient « plus proche, respectivement plus éloigné, du plan équatorial du pneumatique, selon la direction axiale ».

### État de la technique

Comme on le sait, les pneumatiques pour applications routières, et tout particulièrement les pneumatiques pour véhicules de tourisme, apportent une contribution essentielle aux performances des véhicules en matière de résistance ou roulement (et donc d'efficacité énergétique des véhicules), d'adhérence, de réponse dynamique pour le guidage des véhicules (notamment en virage) et d'usure (et donc de coût global d'utilisation des véhicules). Parmi les paramètres de conception des pneumatiques, l'homme du métier connait l'importance du choix du matériau constitutif de la bande de roulement et du matériau constitutif d'une couche appelée fréquemment « sous-couche », qui est une couche prise en sandwich entre l'armature de sommet d'un pneumatique et la partie d'usure de la bande de roulement. Un exemple de sous-couche, c'est-à-dire de couche de caoutchouc insérée entre l'armature de sommet et le matériau de la bande de roulement, est décrit dans le document FR 2 954 333. En général, on utilise des matériaux de sous-couche sous la bande de roulement soit de manière à améliorer la résistance au roulement du pneumatique avec un matériau peu hystérétique, soit pour rigidifier la bande de roulement en cisaillement, mais avec des rigidités modestes pour ne pas trop s'opposer à la mise à plat de la bande de roulement du pneumatique dans l'aire de contact avec le sol.

Cependant, plus la rigidité de la sous-couche est faible, moins bonne est la réponse en poussée de dérive du pneumatique sur sollicitation de braquage du véhicule. En effet, de façon schématique, on peut considérer que l'empilage de couches de caoutchouc radialement à l'extérieur de l'armature de sommet comme une succession de ressorts en série. C'est pourquoi on évite d'introduire des matériaux de trop faible module pour ne pas pénaliser la rigidité de dérive. Or ceci peut être contraire à l'objectif de minimiser la résistance au roulement. Même dans les variantes de rigidités les plus élevées, le module dynamique de cisaillement G* d'un matériau de sous-couche est en général très inférieur à 8 MPa, même lorsque l'on recherche les meilleures performances en comportement.

Par le document WO 2015/170615, on connait aussi un pneumatique comportant trois couches formées trois matériaux superposés radialement. Le module du matériau radialement vers l'extérieur de la bande de roulement et la valeur de tg δ (tangente delta) de celui-ci sont inférieurs aux valeurs des mêmes paramètres du matériau de sous-couche en contact avec le matériau de bande de roulement, c'est-à-dire de celle des deux couches inférieures la plus à l'extérieur radialement. Le module du matériau de la couche radialement intérieure des matériaux de sous-couche et la valeur de tg δ de celui-ci sont inférieurs aux valeurs des mêmes paramètres du matériau de sous-couche en contact avec le matériau de bande de roulement. Cependant, un pneumatique réalisé selon cet enseignement n'apporte pas de progrès dans l'équilibre de performances.

Pour améliorer l'adhérence d'un pneumatique, et plus particulièrement pour l'adhérence sur sol sec et sur sol humide, il est bien connu de diminuer la rigidité ou la dureté du mélange caoutchouteux constituant de la bande de roulement. Cette diminution de rigidité de la bande de roulement permet à celle-ci de mieux épouser la surface rugueuse du sol de roulage et ainsi la surface réelle de contact avec le sol de roulage est augmentée et la performance d'adhérence améliorée par rapport à une bande de roulement dont le mélange caoutchouteux est plus rigide.

De manière connue, la bande de roulement d'un pneumatique est pourvue d'une sculpture comprenant notamment des blocs de sculpture délimités par diverses rainures principales, longitudinales ou circonférentielles, axiales ou encore obliques, les blocs de sculpture élémentaires pouvant en outre comporter diverses incisions ou lamelles plus fines. Les rainures constituent des canaux destinés à évacuer l'eau lors d'un roulage sur sol mouillé. Les parois de ces rainures définissent également les bords des blocs de sculptures ; en fonction de l'orientation des forces auxquelles est soumis un pneumatique en roulage, on parle de bord d'attaque d'un bloc de sculpture lorsque la force est orientée vers le centre du bloc, le bord de fuite d'un bloc de sculpture étant le bord opposé. Ceci étant rappelé, l'utilisation d'un mélange caoutchouteux de bande de roulement moins rigide, s'il favorise l'adhérence, favorise aussi le cisaillement des blocs de sculpture lorsque le pneumatique doit s'opposer à une force orientée axialement, ce qui provoque le basculement des blocs de sculpture ; cela génère de fortes surpressions sur les bords d'attaque des blocs de sculpture ; ces fortes surpressions, à leur tour, génèrent des échauffements très importants.

Ces surpressions et ces échauffements peuvent contribuer à un endommagement très rapide de la bande de roulement du pneumatique et à une exploitation non optimale du potentiel d'adhérence du mélange de la bande de roulement.

Le document EP0869016 A2 divulgue un pneumatique avec une bande de roulement comportant deux mélanges caoutchouteux superposés, dans lequel les mélanges intérieur et extérieur ont des caractéristiques différentes, pour conserver une bonne adhérence du pneumatique après une usure partielle de la bande de roulement et l'apparition en surface de ce mélange intérieur. Cependant, on constate une augmentation significative de la résistance au roulement d'un tel pneumatique par rapport à un pneumatique n'utilisant dans la bande de roulement que le mélange de rigidité faible, toutes autres choses égales par ailleurs. Les documents JP2014/11392 A et US2015/107735 présentent aussi des pneumatiques avec des bandes de roulement comportant deux mélanges coutchouteux distincts.

Pour améliorer la performance d'adhérence des pneumatiques en stabilisant les blocs de sculpture, le document EP 2 708 382 A1 propose un pneumatique dont la bande de roulement comprend un renforcement circonférentiel constitué d'un mélange caoutchouteux de rigidité supérieure à la rigidité du mélange du reste de la bande de roulement. Ce pneumatique est tel que le renforcement circonférentiel comporte un élément de renforcement placé sous chaque rainure circonférentielle et s'étendant radialement de la surface radialement intérieure de la bande de roulement jusqu'à former la totalité du fond de la rainure. Le renforcement des rainures circonférentielles ainsi réalisé permet d'augmenter la poussée de dérive du pneumatique mais la présence d'un mélange rigide en fond de rainure entraîne une difficulté de moulage des témoins d'usure. On constate aussi une augmentation sensible de la résistance au roulement liée notamment à la limitation des mises à plat de la bande de roulement, dans la direction axiale et dans la direction longitudinale.

Pour apporter une amélioration de performances globales en cas d'utilisation de mélanges caoutchouteux de bande de roulement de basse rigidité, le document WO2016/174100 propose d'utiliser un mélange caoutchouteux de bande de roulement de faible dureté et de renforcer la bande de roulement en y incluant un ou plusieurs renforcement circonférentiels ayant une forme triangulaire, vue en coupe méridienne, ledit triangle ayant sa pointe orientée radialement vers l'extérieur.

Dans un autre contexte, le document EP1508457 montre un pneumatique comportant un empilage de matériaux différents en bande de roulement, et comportant une pluralité d'éléments convexes; notons encore que le document JP2011/183994 montre des éléments de forme particulière disposés sous les fonds de rainure.

Un autre pneumatique est également décrit dans le document EP3031627.

Aucun de ces enseignements ne permet d'utiliser, pour la bande de roulement, des mélanges de caoutchouc à forte adhérence sans aboutir soit à une usure rapide lorsque le pneumatique est fortement sollicité soit à une dégradation trop importante de la résistance au roulement du pneumatique.

### Description brève de l'invention

L'invention a pour objet un pneumatique comprenant une armature de sommet et une bande de roulement radialement à l'extérieur de l'armature de sommet, ladite bande de roulement comprenant comprenant :
- au moins deux rainures s'étendant au moins en partie circonférentiellement, chacune rainure étant délimitée radialement vers l'intérieur par un fond de rainure, la bande de roulement ayant une face de contact destinée à venir en contact avec la chaussée pendant le roulage du pneumatique et un niveau limite d'usure situé radialement à l'extérieur dudit fond de rainure,
- une pluralité de blocs de sculpture, deux blocs adjacents axialement étant séparés axialement par l'une desdites rainure,
- au moins deux couches superposées radialement : une sous-couche recouvrant l'armature de sommet, et une couche principale radialement par-dessus la sous-couche,
pneumatique dans lequel la sous-couche comporte au moins trois éléments de renforcement circonférentiels axialement disposés et répartis axialement entre deux rainures axialement consécutives,
lesdits éléments de renforcement circonférentiels étant constitués d'un mélange caoutchouteux de rigidité plus élevée que la rigidité du mélange caoutchouteux du reste de la sous-couche,
les éléments de renforcement circonférentiels s'étendant radialement depuis la surface radialement extérieure de ladite armature de sommet en direction de l'interface entre la sous-couche et la couche principale, lesdits éléments de renforcement circonférentiels ayant une largeur axiale qui diminue progressivement en se déplaçant radialement vers l'extérieur jusqu'à leur extrémité radiale.

Les éléments de renforcement circonférentiel s'opposent, par leur forte raideur en cisaillement, au cisaillement de la sous-couche, ce qui permet d'adopter pour celle-ci, hors éléments de renforcement bien entendu, des matériaux à très basse perte et à faible rigidité sans subir l'habituelle dégradation de poussée de dérive. Par ailleurs, on peut de préférence répartir les éléments de renforcement de façon régulière sur toute la largeur axiale du pneumatique ; l'ajout des éléments de renforcement étant alors symétrique axialement, il n'y a pas de poussée axiale parasite orientée axialement comme on peut le constater avec des conceptions non symétriques axialement. En outre, de par leur faible hauteur radiale, les éléments de renforcement circonférentiel ne s'opposent pas significativement à la mise à plat du sommet du pneumatique lorsque la bande de roulement passe dans l'aire de contact avec le sol ; il en résulte d'excellentes performances de résistance au roulement.

Les éléments de renforcement circonférentiel n'étant pas disposés (ou du moins pas significativement) dans la partie d'usure de la bande de roulement, cela permet de ne pas perturber le contact du pneumatique sur la chaussée ; l'adhérence est ainsi préservée jusqu'à usure totale. Ce renforcement en cisaillement axial permet une amélioration de la rigidité de dérive du pneumatique et donc de la tenue de route du véhicule.

L'élément de renforcement circonférentiel a aussi comme caractéristique importante de s'appuyer directement sur l'armature du sommet du pneumatique. Cela permet d'avoir un bon point d'appui pour rigidifier le sommet et la bande de roulement.

Il est aussi à noter que l'invention assure une excellente rigidification en utilisant un volume de gomme de haute rigidité relativement faible, de l'ordre de 5% à 15% du volume total de gomme dans la bande de roulement, ce qui entraîne un important avantage en adhérence, en usure, en résistance au roulement du pneumatique relativement aux pneumatiques divulgués par le document EP 2 708 382 A1 cité.

Avantageusement, le mélange caoutchouteux constitutif des éléments de renforcement circonférentiel a un module dynamique de cisaillement G* mesuré à 60°C à 10 Hz et sous une contrainte de cisaillement alterné de 0,7 MPa supérieur à 3 MPa et préférentiellement supérieur à 5 MPa et encore plus préférentiellement supérieur à 10 MPa ; en outre, de préférence, le module dynamique de cisaillement G* du mélange caoutchouteux constitutif des éléments de renforcement circonférentiel est au moins deux fois supérieur au module dynamique de cisaillement G* du mélange caoutchouteux du reste de la sous-couche (hors les éléments de renforcement circonférentiel) ; par exemple, son module dynamique de cisaillement G* mesuré à 60°C à 10 Hz et sous une contrainte de cisaillement alterné de 0,7 MPa est de préférence inférieur à 3 MPa et préférentiellement inférieur à 1,5 MPa.

Très avantageusement, le mélange caoutchouteux de la couche principale de la bande de roulement a un module dynamique de cisaillement G* mesuré à 60°C à 10 Hz et sous une contrainte de cisaillement alterné de 0,7 MPa inférieur ou égal à 1,6 MPa et de préférence inférieur à 1,3 MPa. La présence du renforcement circonférentiel permet d'utiliser pleinement les capacités d'adhérence d'un tel mélange de bande de roulement de très faible rigidité. Cela est particulièrement utile dans le cas d'un pneumatique pour véhicule de tourisme.

L'invention concerne plus particulièrement les pneumatiques destinés à équiper des véhicules à moteur à quatre roues ou plus (véhicule de tourisme notament de type sportif, SUV (abréviation de « *Sports Utility Vehicles* »), ou aussi pour équiper des véhicules de type deux roues (notamment motos), ou encore des avions, des véhicules industriels choisis parmi camionnettes, « Poids-lourd » (c'est-à-dire métro, bus, engins de transport routier -camions, tracteurs, remorques-, véhicules hors-la-route tels qu'engins agricoles ou de génie civil), autres véhicules de transport ou de manutention. L'invention trouve à s'appliquer aussi bien aux ensembles gonflés dits « pneumatiques » qu'aux ensembles roulants non pneumatiques.

### Description des Figures

Les objets de l'invention sont maintenant décrits à l'aide du dessin annexé dans lequel :
- la figure 1 représente de manière très schématique (sans respect d'une échelle spécifique), une coupe méridienne d'un pneumatique conforme à un mode de réalisation de l'invention ;
- les figures 2 à 4 présentent en coupe méridienne des pneumatiques conformes à différents modes de réalisation de l'invention
- la figure 5 montre différentes variantes de réalisation d'un élément de l'invention.

### Description détaillée de l'invention

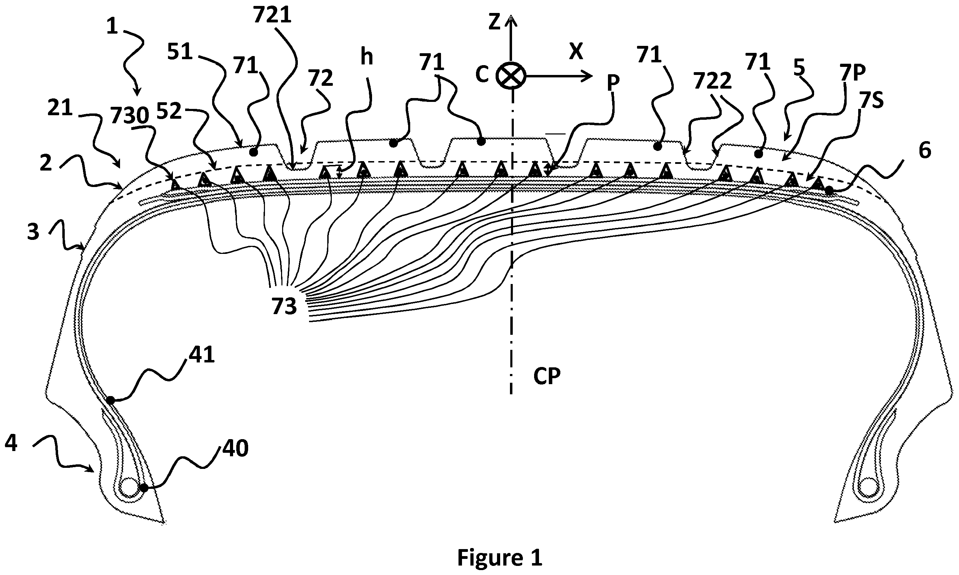

On voit à la figure 1 un pneumatique 1 comprenant un sommet 2, deux flancs 3 reliés chacun à un bourrelet 4. Le sommet 2 est relié de chaque côté à l'extrémité radialement extérieure de chacun des deux flancs. Le sommet 2 comporte une bande de roulement 5. La figure 1 montre un plan équatorial CP, plan perpendiculaire à l'axe de rotation du pneumatique, situé à mi-distance des deux bourrelets 4 (montés sur jante) et passant par le milieu de la largeur axiale du sommet 2 ; la figure 1 indique aussi, par des flèches disposées juste au-dessus de la bande de roulement 5, sur le plan équatorial CP, les directions axiale X, circonférentielle C et radiale Z.

Chaque bourrelet comporte une tringle 40. Une nappe de carcasse 41 est enroulée autour de chaque tringle 40. La nappe de carcasse 41 est radiale et est, de manière connue en soi, constituée par des câbles ; dans ce cas de mise en œuvre, il s'agit de câbles textiles ; ces câbles sont disposés sensiblement parallèlement les uns aux autres et s'étendant d'un bourrelet à l'autre de façon telle qu'ils forment un angle compris entre 80° et 90° avec le plan équatorial CP.

D'un point de vue géométrique, la bande de roulement 5 comprend une pluralité de blocs de sculpture 71. Deux blocs de sculpture 71 axialement adjacents sont séparés par une rainure 72 s'étendant au moins en partie circonférentiellement ; chacune rainure 72 est délimitée radialement vers l'intérieur par un fond 721 de rainure et des parois latérales 722 de rainure. La bande de roulement ayant une face de contact 51 destinée à venir en contact avec la chaussée pendant le roulage du pneumatique et un niveau limite d'usure 52 situé radialement à l'extérieur dudit fond de rainure 721.

D'un point de vue matériaux constitutifs, la bande de roulement 5 comporte deux couches superposées radialement : une sous-couche 7S recouvrant directement l'armature de sommet 6 et une couche principale 7P radialement directement par-dessus la sous-couche 7S (en considérant que la fine couche de matériaux de calandrage des câbles ou fils de l'armature de sommet 6 fait partie de ladite armature de sommet). On appelle usuellement « sous-couche » la couche de mélange de caoutchouc qui ne fait pas partie de couche d'usure de la bande de roulement, ladite couche d'usure étant appelée dans le présent mémoire « couche principale ». La limite entre la sous-couche 7S et la couche principale 7P est représentée en trait discontinu. La sous-couche 7S s'étend radialement sensiblement jusqu'au niveau de ladite limite d'usure 54.

A la figure 1, on voit que le pneumatique comporte trois éléments de renforcement circonférentiels 73 répartis axialement entre deux rainures 72. Les dits éléments de renforcement circonférentiels 73 comportent une extrémité radiale 730. Lesdits éléments de renforcement circonférentiels 73 sont disposés axialement en regard d'un bloc de sculpture 71. Le pneumatique comporte également quatre éléments de renforcement circonférentiels 73 répartis axialement entre chacune des épaules 21 du pneumatique et chacune des rainures 72 axialement les plus à l'extérieur ; chaque groupe de quatre éléments de renforcement circonférentiels 73 est également disposés axialement en regard d'un bloc de sculpture 71, celui axialement le plus à l'extérieur de la bande de roulement. Notons que dans la variante de réalisation illustrée à la figure 1, la sous-couche 7S est constituée du même mélange de caoutchoux que la couche principale 7P.

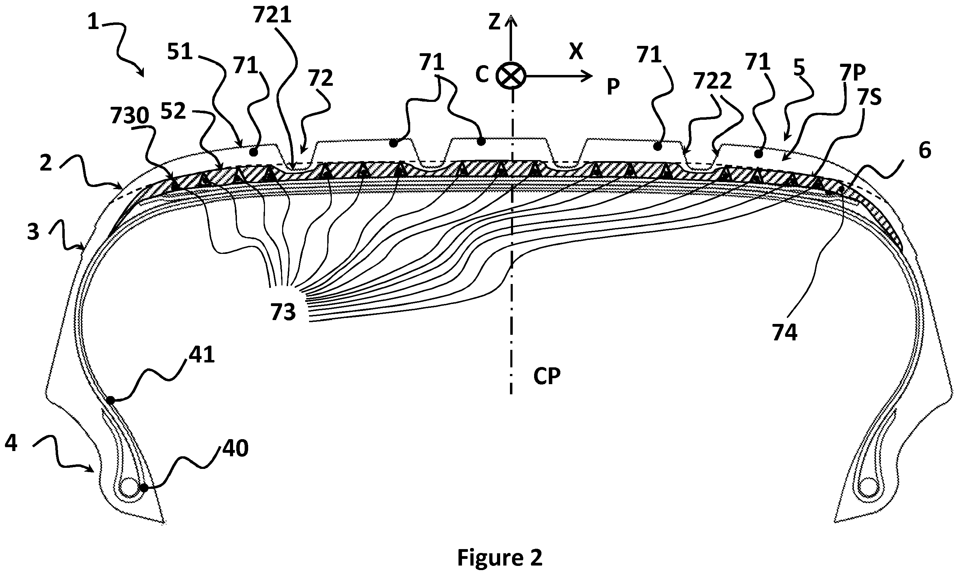

La variante de réalisation illustrée au moyen de la figure 2 diffère du précédent mode de réalisation en ce que la sous-couche 7S est constituée d'un mélange de caoutchoux différent du mélange de caoutchouc de la couche principale 7P (section hachurée à la figure 2), tous les autres aspects étant identiques ce qui fait qu'il n'est pas utile de les décrire à nouveau.

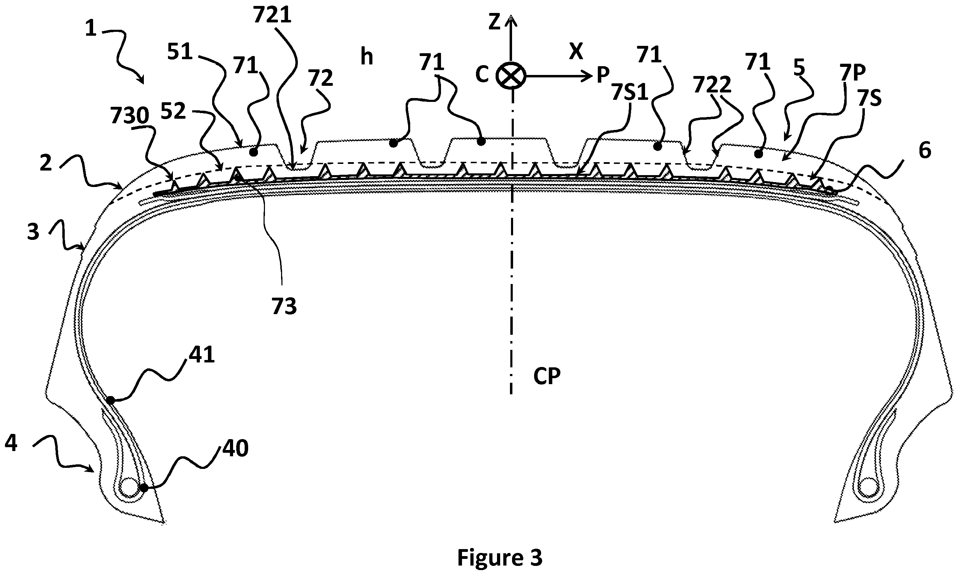

A la figure 3, on voit une variante de réalisation du pneumatique selon l'invention dans laquelle on voit qu'une partie de la sous-couche est formée d'une couche de base 7S1 recouvrant directement l'armature de sommet 6, formée du même matériau que les éléments de renforcement circonférentiels 72. Ladite couche de base s'étend radialement sur une hauteur valant moins de 10% de l'épaisseur radiale « h » de ladite sous-couche 7S. Le reste de la sous-couche est constitué du même mélange de caoutchouc que la couche principale 7P.

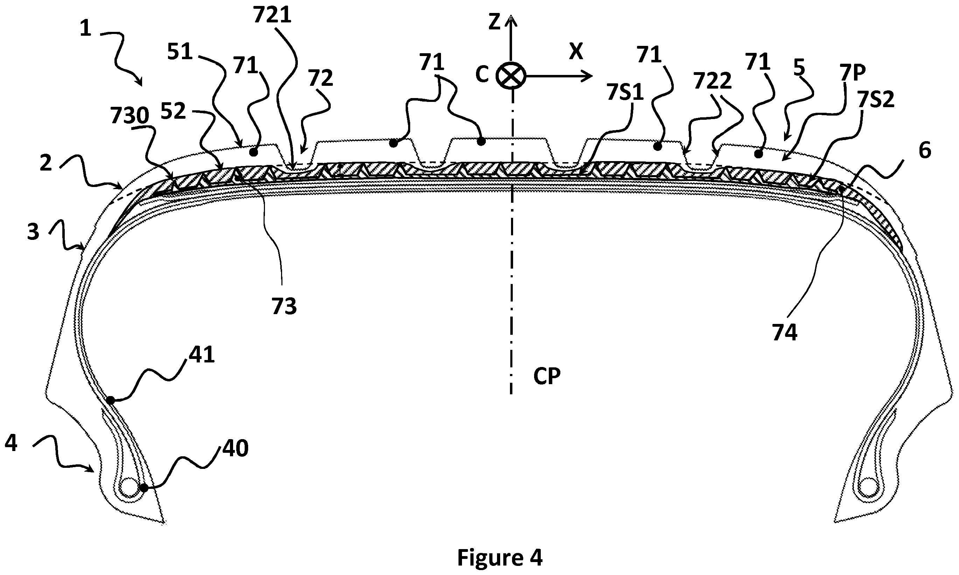

A la figure 4, on voit une variante de réalisation du pneumatique selon l'invention dans laquelle la sous-couche comporte une couche de base 7S1 (formée comme décrit ci-dessus) et une seconde couche 7S2, formé comme la sous-couche de la figure 2, d'un mélange de coutchouc différent à la fois du mélange de coutchouc formant les éléments de renforcement circonférentiels 73 et du mélange de caouchouc de la couche principale 7P, par exemple un mélange de caoutchouc plus rigide que celui de la couche principale 7P et moins rigide que celui formant les éléments de renforcement circonférentiels 73.

Quant à la hauteur radiale « h » de l'élément de renforcement circonférentiel 73, elle peut varier de environ 30% de l'épaisseur « p » de la sous couche à 120% de ladite épaisseur « p ». Cela permet d'obtenir un effet de renforcement significatif. Notons encore que, dans tous les modes de réalisations illustrant l'invention, l'extrémité radiale 730 desdits éléments de renforcement circonférentiels 73 est située radialement au niveau de ladite limite d'usure. Plus généralement, il convient que l'extrémité radiale 730 desdits éléments de renforcement circonférentiels 73 soit située radialement en dessous du ou sensiblement au niveau de ladite limite d'usure.

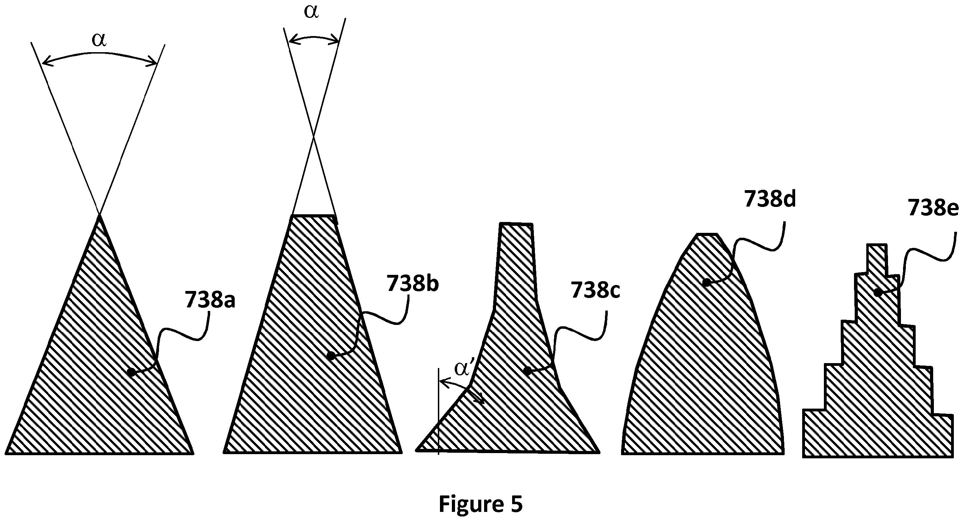

La forme des éléments de renforcement circonférentiel présentés est triangulaire, mais cette forme peut varier et les parois latérales peuvent être concaves, convexes ou en escaliers notamment sans sortir du cadre de cet invention. Le lecteur se reportera à la figure 5 dans laquelle un élément de renforcement circonférentiel 738a vu en coupe méridienne présente une forme en triangle telle qu'employé dans toutes les illustrations précédentes, les parois latérales vues en coupe méridienne étant donc des droites. De préférence, l'angle α que forment les deux parois latérales du ou des éléments de renforcement circonférentiels est compris entre 35 et 45 degrés. En dessous de 35 degrés, l'efficacité du point d'appui est réduite et au-delà de 45 degrés, le volume de l'élément de renforcement circonférentiel devient trop important.

Les parois de cet élément de renforcement circonférentiel peuvent être concaves, convexes ou en escalier. Ainsi, dans la variante formée par l'élément de renforcement circonférentiel 738b, la coupe méridienne de celui-ci est un trapèze. Dans la variante formée par l'élément de renforcement circonférentiel 738c, les parois latérales vues en coupe méridienne sont des segments de droite, l'angle angle α' que forme chacun de ces segments avec la direction radiale variant d'un segement au suivant (diminuant en allant radialement vers l'extérieur sur la figure). Dans la variante formée par l'élément de renforcement circonférentiel 738d, les parois latérales vues en coupe méridienne sont courbes, convexes ; elles pourraient être concaves. Dans la variante formée par l'élément de renforcement circonférentiel 738e, les parois latérales vues en coupe méridienne forment des escaliers. Ces variations de forme de la coupe méridienne peuvent être utilisée avec toutes les variantes précédemment décrites.

Les éléments de renforcement circonférentiel doivent servir de point d'appui pour s'opposer au cisaillement de la sous-couche. Pour cela le mélange constituant ces éléments de renforcement circonférentiel est très rigide.

Le tableau 1 ci-dessous donne un exemple d'une telle formulation.

**Tableau 1**

| Constituant | C.1 (en pce) |
|---|---|
| NR (1) | 100 |
| Noir de carbone (2) | 70 |
| Résine Formophénolique (3) | 12 |
| ZnO (4) | 3 |
| Acide stéarique (5) | 2 |
| 6PPD (6) | 2,5 |
| HMT (7) | 4 |
| Soufre | 3 |
| CBS (8) | 2 |

| | |
|---|---|
| (1) Caoutchouc Naturel ; (2) Noir de carbone N326 (dénomination selon la norme ASTM D-1765) ; (3) Résine formophénolique novolac (« Peracit 4536K » de la société Perstorp) ; (4) Oxyde de zinc (grade industriel - société Umicore) ; (5) Stéarine (« Pristerene 4931 » de la société Uniqema) ; (6) N-1,3-diméthylbutyl-N-phénylparaphénylènediamine (Santoflex 6-PPD de la société Flexsys) ; (7) Hexaméthylènetétramine (de la société Degussa) ; (8) N-cyclohexyl-benzothiazyl sulphénamide(Santocure CBS de la société Flexsys). | |

Cette formulation permet d'obtenir des mélanges de rigidité élevée. Le module dynamique de cisaillement G* mesuré sous une contrainte de cisaillement alternée de 0,7 MPa à 10 Hz et 60 degrés Celsius est de 30,3 MPa.

Ce matériau très rigide pour les renforcements circonférentiels est de préférence utilisé avec des bandes de roulement de faible rigidité dont le tableau 2 ci-dessous donne un exemple de formulation adaptée :

**Tableau 2**

| Composition | B1 (pce) |
|---|---|
| SBR (a) | **100** |
| Silice (b) | **110** |
| Agent de couplage (c) | **9** |
| Plastifiant liquide (d) | **20** |
| Plastifiant résine (e) | **50** |
| Noir | **5** |
| Oxyde de zinc | **3** |
| Acide stéarique | **2** |
| Antioxydant (f) | **2** |
| Accélérateur (g) | **2** |
| DPG | **2** |
| Soufre | **1** |

Les formulations sont données en masse.
(a) SBR avec 27% styrène, butadiène -1,2 :5%, cis-1,4 :15%, trans -1,4: 80% Tg -48°C
(b) Silice « Zeosil1165MP » de la société Solvay de surface BET 160m²/g
(c) Silane TESPT « SI69 » de la société Evonik
(d) Huile TDAE « Flexon 630 » de la société Shell
(e) Résine « Escorez 2173 » de la société Exxon
(f) Antioxydant « Santoflex 6PPD » de la société Solutia
(g) Accélérateur « Santocure CBS » de la société Solutia
pce: partie en poids pour 100 parties d'élastomère.

Le module dynamique de cisaillement G* après vulcanisation est de 0,9 MPa.

## Revendications

1. Pneumatique (1) comprenant une armature de sommet (6) et une bande de roulement (5) radialement à l'extérieur de l'armature de sommet (6), ladite bande de roulement (7) comprenant :
- au moins deux rainures (72) s'étendant au moins en partie circonférentiellement, chacune rainure étant délimitée radialement vers l'intérieur par un fond de rainure, la bande de roulement ayant une face de contact destinée à venir en contact avec la chaussée pendant le roulage du pneumatique et un niveau limite d'usure situé radialement à l'extérieur dudit fond de rainure,
- une pluralité de blocs (71) de sculpture, deux blocs adjacents axialement étant séparés axialement par l'une desdites rainure (72),
- au moins deux couches superposées radialement : une sous-couche (7S) recouvrant l'armature de sommet (6), et une couche principale (7P) radialement par-dessus la sous-couche (7S),
**caractérisé en ce que** la sous-couche comporte au moins trois éléments de renforcement circonférentiels (73) axialement disposés et répartis axialement entre deux rainures (72) axialement consécutives,
lesdits éléments de renforcement circonférentiels (73) étant constitués d'un mélange caoutchouteux de rigidité plus élevée que la rigidité du mélange caoutchouteux du reste de la sous-couche,
les éléments de renforcement circonférentiels (73) s'étendant radialement depuis la surface radialement extérieure de ladite armature de sommet (6) en direction de l'interface entre la sous-couche (7S) et la couche principale (7P), lesdits éléments de renforcement circonférentiels ayant une largeur axiale qui diminue progressivement en se déplaçant radialement vers l'extérieur jusqu'à leur extrémité radiale (730).

2. Pneumatique (1) selon la revendication 1, dans lequel le module dynamique de cisaillement G* du mélange caoutchouteux des éléments de renforcement circonférentiels (73) est au moins deux fois supérieur au module dynamique de cisaillement G* du mélange caoutchouteux du reste de la sous-couche, ledit module étant mesuré à 60°C à 10 Hz et sous une contrainte de cisaillement alterné de 0.7MPa.

3. Pneumatique selon l'une quelconque des revendications précédentes, dans lequel la sous-couche (7S) s'étend radialement sensiblement jusqu'au niveau de ladite limite d'usure.

4. Pneumatique selon l'une quelconque des revendications précédentes, dans lequel l'extrémité radiale (730) desdits éléments de renforcement circonférentiels (73) est située radialement en dessous du ou sensiblement au niveau de ladite limite d'usure.

5. Pneumatique selon l'une quelconque des revendications précédentes, dans lequel la sous-couche (7S) comporte une couche de base (7S1) recouvrant directement l'armature de sommet (6), formée du même matériau que les éléments de renforcement circonférentiels (73), ladite couche de base s'étendant radialement sur une hauteur valant moins de 10% de l'épaisseur radiale « h » de ladite sous-couche (7S).

6. Pneumatique selon l'une quelconque des revendications précédentes, dans lequel chaque élément de renforcement circonférentiel (73) forme un triangle, vu en section méridienne, et en ce que l'angle des parois latérales du triangle est compris entre 35 et 45 degrés.

7. Pneumatique selon l'une quelconque des revendications précédentes, dans lequel le mélange caoutchouteux constitutif de chaque élément de renforcement circonférentiel (73) a un module dynamique de cisaillement G* mesuré à 60°C à 10 Hz et sous une contrainte de cisaillement alterné de 0,7 MPa supérieur à 3 MPa et en ce que le mélange caoutchouteux constitutif de la couche principale (7P) a un module dynamique de cisaillement G* mesuré à 60°C à 10 Hz et sous une contrainte de cisaillement alterné de 0,7 MPa inférieur à 1,6 MPa.

## Patentansprüche

1. Reifen (1), welcher eine Scheitelbewehrung (6) und einen Laufstreifen (5) radial außerhalb der Scheitelbewehrung (6) umfasst, wobei der Laufstreifen (7) umfasst:
- wenigstens zwei Rillen (72), die sich wenigstens teilweise in Umfangsrichtung erstrecken, wobei jede Rille radial nach innen von einem Rillenboden begrenzt wird, wobei der Laufstreifen eine Kontaktfläche, die dazu bestimmt ist, während des Rollens des Reifens mit der Fahrbahn in Kontakt zu kommen, und eine Abnutzungsgrenze, die sich radial außerhalb des Rillenbodens befindet, aufweist,
- mehrere Profilblöcke (71), wobei zwei axial benachbarte Blöcke durch eine der Rillen (72) axial getrennt sind,
- wenigstens zwei radial übereinander angeordnete Schichten: eine Unterschicht (7S), welche die Scheitelbewehrung (6) bedeckt, und eine Hauptschicht (7P) radial über der Unterschicht (7S),
**dadurch gekennzeichnet, dass** die Unterschicht wenigstens drei umlaufende Verstärkungselemente (73) aufweist, die axial angeordnet und axial zwischen zwei axial aufeinander folgenden Rillen (72) verteilt sind,
wobei die umlaufenden Verstärkungselemente (73) aus einer Kautschukmischung mit einer Steifigkeit bestehen, die höher als die Steifigkeit der Kautschukmischung des Restes der Unterschicht ist, wobei sich die umlaufenden Verstärkungselemente (73) radial von der radial äußeren Fläche der Scheitelbewehrung (6) in Richtung der Grenzfläche zwischen der Unterschicht (7S) und der Hauptschicht (7P) erstrecken, wobei die umlaufenden Verstärkungselemente eine axiale Breite aufweisen, welche sich radial nach außen hin bis zu ihrem radialen Ende (730) allmählich verringert.

2. Reifen (1) nach Anspruch 1, wobei der dynamische Schermodul G* der Kautschukmischung der umlaufenden Verstärkungselemente (73) mindestens zweimal so groß wie der dynamische Schermodul G* der Kautschukmischung des Restes der Unterschicht ist, wobei der Modul bei 60 °C, bei 10 Hz und unter einer wechselnden Scherbeanspruchung von 0,7 MPa gemessen wird.

3. Reifen nach einem der vorhergehenden Ansprüche, wobei sich die Unterschicht (7S) radial im Wesentlichen bis zur Höhe der Abnutzungsgrenze erstreckt.

4. Reifen nach einem der vorhergehenden Ansprüche, wobei sich das radiale Ende (730) der umlaufenden Verstärkungselemente (73) radial unterhalb oder im Wesentlichen auf der Höhe der Abnutzungsgrenze befindet.

5. Reifen nach einem der vorhergehenden Ansprüche, wobei die Unterschicht (7S) eine die Scheitelbewehrung (6) unmittelbar bedeckende Basisschicht (7S1) aufweist, die aus demselben Material wie die umlaufenden Verstärkungselemente (73) ausgebildet ist, wobei sich die Basisschicht radial auf einer Höhe erstreckt, die weniger als 10 % der radialen Dicke "h" der Unterschicht (7S) beträgt.

6. Reifen nach einem der vorhergehenden Ansprüche, wobei jedes umlaufende Verstärkungselement (73), in einem Meridianschnitt gesehen, ein Dreieck bildet, und wobei der Winkel der Seitenwände des Dreiecks zwischen 35 und 45 Grad liegt.

7. Reifen nach einem der vorhergehenden Ansprüche, wobei die Kautschukmischung, aus der jedes umlaufende Verstärkungselement (73) besteht, einen dynamischen Schermodul G*, gemessen bei 60 °C, bei 10 Hz und unter einer wechselnden Scherbeanspruchung von 0,7 MPa, aufweist, der größer als 3 MPa ist, und wobei die Kautschukmischung, aus der die Hauptschicht (7P) besteht, einen dynamischen Schermodul G*, gemessen bei 60 °C, bei 10 Hz und unter einer wechselnden Scherbeanspruchung von 0,7 MPa, aufweist, der kleiner als 1,6 MPa ist.

## Claims

1. Tyre (1) comprising a crown reinforcement (6) and a tread (5) radially outside the crown reinforcement (6), said tread (7) comprising:
- at least two grooves (72) extending at least partially circumferentially, each groove being delimited radially towards the inside by a groove bottom, the tread having a contact face intended to come into contact with the roadway when the tyre is being driven on and a wear limit level situated radially on the outside of said groove bottom;
- a plurality of tread pattern blocks (71), two axially adjacent blocks being axially separated by one of said grooves (72),
- at least two radially superposed layers: a sublayer (7S) covering the crown reinforcement (6), and a main layer (7P) radially above the sublayer (7S),
**characterized in that** the sublayer comprises at least three circumferential reinforcing elements (73) arranged axially and distributed axially between two axially consecutive grooves (72),
said circumferential reinforcing elements (73) being formed of a rubber compound having greater stiffness than the stiffness of the rubber compound of the rest of the sublayer,
the circumferential reinforcing elements (73) extending radially from the radially exterior surface of said crown reinforcement (6) in the direction of the interface between the sublayer (7S) and the main layer (7P), said circumferential reinforcing elements having an axial width which decreases gradually with increasing radial proximity to the outside as far as the radial end thereof (730).

2. Tyre (1) according to Claim 1, wherein the dynamic shear modulus G* of the rubber compound of the circumferential reinforcing elements (73) is at least two times greater than the dynamic shear modulus G* of the rubber compound of the rest of the sublayer, said modulus being measured at 60°C at 10 Hz and under an alternating shear stress of 0.7 MPa.

3. Tyre according to any one of the preceding claims, wherein the sublayer (7S) extends radially substantially as far as the level of said wear limit.

4. Tyre according to any one of the preceding claims, wherein the radial end (730) of said circumferential reinforcing elements (73) is situated radially below or substantially at the level of said wear limit.

5. Tyre according to any one of the preceding claims, wherein the sublayer (7S) comprises a base layer (7S1) directly covering the crown reinforcement (6), formed of the same material as the circumferential reinforcing elements (73), said base layer extending radially over a height equal to less than 10% of the radial thickness "h" of said sublayer (7S).

6. Tyre according to any one of the preceding claims, wherein each circumferential reinforcing element (73) forms a triangle, viewed in meridional section, and the angle of the lateral walls of the triangle is between 35 and 45 degrees.

7. Tyre according to any one of the preceding claims, wherein the rubber compound constituting each circumferential reinforcing element (73) has a dynamic shear modulus G*, measured at 60°C at 10 Hz and under an alternating shear stress of 0.7 MPa, of greater than 3 MPa and the rubber compound constituting the main layer (7P) has a dynamic shear modulus G*, measured at 60°C at 10 Hz and under an alternating shear stress of 0.7 MPa, of less than 1.6 MPa.
